# EUROPÄISCHE PATENTANMELDUNG

(11) **EP 2 312 432 A1**
(43) Veröffentlichungstag der Anmeldung: **20.04.2011**
(21) Anmeldenummer: 09173292.5
(22) Anmeldetag: 16.10.2009
(51) Int. Cl.: G06F 3/147, G09G 3/34

(54) **Warenetikett**

(71) Anmelder: Reschke, Herbert-Helmut, 44627 Herne (DE)
(72) Erfinder: Reschke, Herbert-Helmut, 44627 Herne (DE)
(74) Vertreter: Schwabe - Sandmair - Marx

(57) **Zusammenfassung**

System zum Anzeigen aktueller Informationen an Warenträgern in Kauf- und Lagerhäusern, wobei das System einen Zentralrechner (7) der zum Eingeben, Speichern, Korrigieren und Versenden warenrelevanter Daten geeignet ist, ein oder mehrere elektronische Warenetiketten (1), die die Informationen anzeigen, die der Zentralrechner (7) übermittelt, ein offenes Funknetzwerk (11), über welches wenigstens Daten von dem Zentralcomputer (7) an die elektronischen Warenetiketten (1) gefunkt werden und eine Elektronik umfasst, die mit den Warenetiketten (1) verbunden oder verbindbar ist und die die Funkdaten empfängt, verarbeitet, speichert und auf den Warenetiketten (1) sichtbar macht und wobei die elektronischen Warenetiketten (1) mit E-Paper realisiert sind.

## Beschreibung

Die Erfindung betrifft ein Warenmanagementsystem. Insbesondere ein System zum Anzeigen und Ändern von Informationen an Warenträgern in Kauf und Lagerhäusern. Das System besteht im Wesentlichen aus einem Zentralrechner, einem offenen Funknetzwerk und wenigstens einem elektronischen Warenetikett, wobei das wenigstens eine Warenetikett mit E-Paper realisiert ist. Das System weist weiterhin eine spezielle Elektronik auf, mit der die Funkdaten empfangen, verarbeitet, gespeichert und auf dem Etikett sichtbar gemacht werden können.

Im Bereich des Warenmanagements gibt es seit langem Anstrengungen Systeme bereit zu stellen, die es erlauben die Daten eines am Regal, der Ware oder einem anderen geeigneten Ort angebrachten Warenetikett von einem Zentralcomputer aus zu verändern. So können Angaben am POS sehr schnell und effektiv geändert werden, ohne dass das Personal die Warenetiketten an den jeweiligen Positionen auswechseln, überkleben oder anderweitig manipulieren muss. Aus der DE 197 30 051 A1 ist eine Vorrichtung und ein Verfahren zum Anzeigen von Preisen und Arkikelbezeichnungen an Warenträgern bekannt, bei dem Angaben auf einem elektronischen Etikett von einer Steuerzentrale aus geändert werden können. Zur eindeutigen Zuordnung des elektronischen Warenetiketts zur Ware im Regal wird die zur Ware gehörende ID-Nummer bzw. der entsprechende Strichcode auf das elektronische Etikett aufgeklebt oder unverwechselbar und unveränderbar bei der Herstellung des Etiketts in dieses eingeprägt. Ein Etikett ist als immer einer Ware zugeordnet, beim Wechsel der Ware oder der ID-Nummer der Ware muss ein neues Etikett hergestellt werden. Aus der EP 1 110 136 B1 ist ein intelligentes elektronisches Etikett mit elektronischer Tinte bekannt. Das Etikett besteht aus einem Träger, auf dem die elektronische Tinte angeordnet ist und einer oder mehreren Aktivierungsschichten zur Aktivierung der elektronischen Tinte, die eine oder mehrere Anzeigeschichten einschließt bzw. einschließen. Weiterhin weist das Etikett wenigstens eine Antennenschicht und eine Prozessorenschicht auf. Auf dem Etikett können Informationen angezeigt werden, die durch den Menschen oder eine Maschine lesbar sind. Die Übertragung der anzuzeigenden Daten erfolgt von einem zentralen Computer über ein Aktivierungsmodul an das elektronische Etikett. Die Übertragung vom Computer zum Aktivierungsmodul kann über ein übliches Kabel, ein drahtloses Netzwerk, Lichtleitfasern oder Funksignale erfolgen.

Es ist eine Aufgabe der Erfindung ein Warenmanagementsystem zur Verfügung zu stellen, das die Möglichkeiten der Erfassung, Veränderung und Korrektur von warenbezogenen Daten weiter verbessert.

Diese Aufgabe wird verfüllt mit einem System nach Anspruch 1.

Erfindungsgemäß wird ein System bereitgestellt, mit dem aktuelle Informationen an Warenetiketten in Kauf- und Lagerhäusern angezeigt und veränderbar sind, wobei das System wenigstens einen Zentralrechner zum Eingeben, Speichern, Korrigieren und Versenden warenrelevanter Daten aufweist, sowie wenigstens ein elektronisches Warenetikett, das Informationen anzeiget, die ihm vom Zentralrechner übermittelt werden. Die Datenübertragung erfolgt über ein offenes Funknetzwerk, über welches Daten von dem Zentralcomputer an eine Elektronik gefunkt werden. Die empfangenen Funkdaten können von der Elektronik empfangen, verarbeitet, gespeichert und auf dem wenigstens einen Warenetikett sichtbar gemacht werden, wobei das wenigstens eine elektronische Warenetikett mit E-Paper realisiert ist.

Die Warenetiketten können an einem Waren- oder Lagerregal, einer Ware selbst oder einem andern geeigneten Ort angebracht sein. Bevorzugt sind die Warenetikette am POS (Point of Sale) angebracht. Auf den Etiketten wird wenigstens die Warenbezeichnung, der aktuelle Preis und der EAN-Code oder ein anderer Identifizierungscode zur Identifizierung der Ware angegeben. Weiter Informationen, wie die Warenmarke, Kennzeichnung von Sonderangeboten oder andere Aktionen, etc. können zusätzlich auf dem Warenetikett angezeigt werden. Dabei können alle Angaben in schwarz-weiß bzw. weiß-schwarz gemacht werden oder das Warenetikett kann für eine zwei- oder mehrfarbig Darstellung geeignet sein.

E-Paper reflektiert das Licht wie normales Papier. Texte oder Bilder werden dauerhaft angezeigt, ohne dass dafür eine Erhaltungsspannung erforderlich ist. Die Anzeige kann jedoch zu einem späteren Zeitpunkt geändert werden. Elektronisches Papier ist ähnlich wie normales Papier biegsam. Das elektronische Papier vereint die Vorteile von Computerbildschirm und Papier. Gegenüber herkömmlichen Bildschirmen, wie sie zur TV- und Grafikwiedergabe genutzt werden, bietet es die folgenden Vorteile: Der Bildinhalt sieht wegen des geringen Abstandes der bildgebenden Elemente zur Oberfläche aus jedem Blickwinkel gleich aus; durch die statische Anzeige tritt kein Flimmern auf; es ist sehr dünn, leicht und biegsam; es kann in allen Größen und Formen hergestellt werden; es benötigt wenig Energie, um die Anzeige zu erzeugen und aufrecht zu erhalten, da nur zum Ändern des Bildinhalts (Seitenwechsel) ein Stromfluss erforderlich ist; es ist sowohl bei normalem Raumlicht als auch in hellem Sonnenschein lesbar, da die bildgebenden Elemente reflektiv sind und die Auflösung sehr hoch ist (größer 100 DPI).

Zur Wiedergabe der anzuzeigenden Information weist jedes Warenetikett bevorzugt eine aktive Matrix auf und eine Elektronik bzw. ein Elektronikmodul, das bevorzugt fest oder abnehmbar mit dem Warenetikett verbunden ist. Auf dem Warenetikett wird so eine hoch auflösende Wiedergabe der empfangenen Daten ermöglicht.

Anstatt dass jedes Warenetikett je ein Elektronikmodul aufweist, können auch mehrere Warenetiketten gemeinsam von einem Elektronikmodul angesteuert und aktiviert werden. So kann beispielsweise in einem Warenhaus ein Elektronikmodul pro Regalebene oder bei kleinen Regalen ein Elektronikmodul pro Regal vorgesehen sein. Bei der Ansteuerung von mehr als einem Warenetikett durch ein Elektronikmodul sind die Warenetiketten mit der Elektronik über eine Art Standleitung, zum Beispiel aus einem Glasfaserkabel oder einem konventionellen Kabel, verbunden und jedes Warenetikett weist eine eindeutige zuordenbare Identifikation auf. Die Leitung kann zum Beispiel Bestandteil einer Halteschiene für die Warenetiketten sein oder durch diese gebildet werden. In beiden Fällen ist darauf zu achten, dass der Kunde, der Ware aus dem Regal nimmt, kein leitendes Teil berühren kann.

Von der Elektronik kann dann gezielt ein einzelnes Warenetikett angesprochen werden, mehrere Warenetiketten können zum Beispiel nacheinander angesteuert werden, um Angaben auf dem jeweiligen Warenetikett zu ändern. Bevorzugt können mehr als ein Warenetikett gleichzeitig von einem Elektronikmodul angesteuert werden, besonders bevorzugt können alle mit dem Elektronikmodul verbundenen Warenetiketten gleichzeitig angesteuert werden.

Die Verbindung zwischen dem Elektronikmodul und dem Warenetikett kann aber auch eine drahtlose sein. So können die Elektronikmodule die Daten zum Beispiel über ein Unterfunknetzwerk mit kleiner Reichweite an die jeweiligen Warenetiketten weitergeben. In diesem Fall können die Aufgaben eines Elektronikmoduls auch bei Totalausfall von dem nächstliegenden Elektronikmodul oder mehreren benachbarten Elektronikmodulen übernommen werden, deren Funkbereich bis zu den vom Ausfall betroffenen Warenetiketten reicht. Dabei können die Unterfunknetzwerke von vornherein so geplant werden, dass ein Warenetikett immer zumindest im Funkbereich von zwei Elektronikmodulen liegt.

In einem Kaufhaus oder Warenlager werden immer mehrere Elektronikmodule die Elektronik des Systems bilden. Dabei ist jedes der Elektronikmodule direkt oder über Gateways mit dem Zentralrechner verbunden oder verbindbar. Die Elektronikmodule können darüber hinaus auch alle untereinander über das offene Funknetzwerk verbunden sein, so dass die einzelnen Elektronikmodule miteinander kommunizieren können. So können Ausfälle von Funktionen von Elektronikmodulen durch intakte Elektronikmodule mit übernommen werden

Mittels der Elektronikmodule können zum Beispiel Daten vom Zentralrechner empfangen, die Plausibilität der empfangenen Daten (zum Beispiel durch einen Vergleich der Soll-Adresse mit einer in einem Speicher der Elektronik oder des Warenetiketts enthaltenen Ist-Adresse) überprüft und die empfangenen Signale zur Wiedergabe auf den Warenetiketten aufbereitet werden.

Nachdem die Daten überprüft und verarbeitet wurden, leitet die Elektronik bzw. das betreffende Elektronikmodul die Daten an das Warenetikett weiter, wobei gleichzeitig das Warenetikett mit einer Stromquelle verbunden wird, damit die Änderung auf dem Warenetikett durchgeführt werden kann.

Nach erfolgreicher Änderung des Warenetiketts kann die Elektronik ein Bestätigungssignal vom Warenetikett empfangen, woraufhin der Stromzufluss zum Warenetikett oder wenn das Warenetikett selbst über eine Stromquelle, zum Beispiel eine Batterie und/oder ein Photovoltaikpanel verfügt, im Warenetikett wieder unterbrochen wird. Verfügt das Warenetiketts nicht über eine eigene Stromquelle, so wird es bevorzugt von einer Stromquelle des Elektronikmoduls mit dem Strom versorgt, der zum Wechsel der Anzeige notwendig ist.

Jedes der Elektronikmodule weist bevorzugt wenigstens einen Speicher auf, in dem wenigstens die aktuell auf dem Warenetikett bzw. den Warenetiketten wiedergegebenen Daten, abgespeichert sind. Weiterhin können in dem Speicher Informationen abgelegt sein, die es erlauben, dass die Angaben auf dem/den Warenetikett/en ohne weitere Signale vom Zentralrechner automatisch gewechselt werden, zum Beispiel zu einem bestimmten Zeitpunkt oder nach einem bestimmten Zeitmuster. Letztere Funktion kann beispielsweise verkaufsfördernd dazu genutzt werden, die Angaben für bestimmte Produkte, wie frische Backwaren, zu einer bestimmten Stunde, der so genannten Happy Hour, automatisch gewechselt werden.

Vorteilhafter Weise kontrolliert die Elektronik die Funktionsfähigkeit des Warenetiketts und generiert einen Alarm im Zentralrechner, wenn es eine Störung feststellt.

Bekannt sind Elektronikmodule mit einem biegesteifen Träger. Bevorzugt bestehen die Träger aus einem flexiblen, das heißt, nicht biegefestem Material, zum Beispiel einem geeigneten Kunststoff, auf das die Elektronik bevorzugt aufgedruckt ist. Dabei sind die Elektronikmodule bevorzugt kleiner als das Warenetikett, mit geringerer Breite und Länge, so dass die Elektronik insgesamt hinter dem Warenetikett angebracht werden kann und für den Kunden nicht sichtbar ist. Die Dicke der Elektronikmodule ist geringer als 10 mm, bevorzugt geringer als 8 mm und besonders bevorzugt geringer als 6 mm.

Die Elektronikmodule können bevorzugt vor Ort mit dem Warenetikett verbunden werden, zum Beispiel bei einem Kleidungsstück, bei dem das Warenetikett an der Außenseite der Kleidung sichtbar ist und das Elektronikmodul über wenigstens eine nadelförmige Verbindung mit dem Warenetikett verbunden, sich in dem Kleidungsstück befindet. Das Elektronikmodul kann in diesem Fall dann zusätzlich die Funktion eines Alarmgebers umfassen, der einen Alarm auslöst, wenn das Kleidungsstück oder eine andere Ware mit dem Warenetikett aus dem Verkaufsbereich mitgenommen wird. Das heißt, wenn das Warenetikett und das Elektronikmodul als Modul mobil einsetzbar sind, kann das Elektronikmodul weitergehende Funktionen, wie die genannte Alarmfunktion oder eine Funktion, die das Auffinden der Ware erleichtert (zum Beispiel ein Blink- oder Hörsignal oder bei wertvollen Waren eine passive GPS-Ortbarkeit), übernehmen.

Bei dem Funknetzwerk handelt es sich bevorzugt um ein offenes Funknetzwerk nach ZigBee^{®}-Standard. Es ist speziell für den Einsatz wartungsfreier Funkschalter und Funksensoren mit beschränkter Energieversorgung (z. B. durch Batterie) in schwer zugänglichen Bereichen vorgesehen, wo der Austausch von Batterien nur mit großem Aufwand möglich ist. Mittels des Netzwerkes können der Zentralrechner und die Warenetiketten bzw. die Elektronikmodule im Kurzstreckenbereich (10 bis 200 Meter) verbunden werden.

In einem offenen Funknetzwerk nach ZigBee^{®}-Standard ist sowohl eine direkte als auch eine indirekte Adressierung möglich. Bei der direkten Adressierung werden ein Knoten (Elektronikmodul) und ein Endpunkt (Warenetikett) angegeben. Ein Knoten kann dabei mehrere Endpunkte bedienen. Jeder Knoten stellt zum Beispiel 255 Endpunkte zur Verfügung, von denen viele für spezielle Aufgaben reserviert sind. Für die Anwendungslogik sind die Endpunkte 1 bis 240 vorgesehen. Endpunkt 255 ist für Rundrufe an alle Endpunkte reserviert. Die Endpunkte 241 bis 254 sind für spätere spezielle Aufgaben reserviert, Endpunkt 0 für Verwaltungsaufgaben.

Bei der indirekten Adressierung vergibt der Koordinator (z.B. der Zentralrechner) Kurzadressen. Beim Verbinden eines Knoten mit einem Netzwerk meldet dieser sich beim Koordinator an und bekommt eine Adresse zugewiesen. Der Koordinator legt die Kurzadresse mit der dazugehörigen MAC-Adresse in einer Tabelle in seinem Speicher ab. Möchte ein Knoten mit einem anderen kommunizieren, wird zunächst eine Anfrage an den Koordinator gesendet, der sie an den jeweiligen Empfängerknoten weiterleitet. Diese Information über das logische Verbinden von Knoten wird Binding genannt. Der Koordinator legt für jede logische Verbindung in der Bindingtabelle einen Eintrag an. So wird das Verwalten des Netzwerks erheblich vereinfacht und flexibilisiert. Funktionen neuer Geräte können durch einmaliges Binding schnell hinzugefügt oder vorhandene Geräte ersetzt werden.

Zusätzlich kann das System ein tragbares Lesegerät umfassen, mit dessen Hilfe Informationen von den Warenetiketten abgelesen und über das offene Funknetzwerk an den Zentralrechner gefunkt werden. Dabei handelt es sich zum Beispiel um einen Barcode-Leser oder ein ähnliches Gerät, mit dem andere, eventuell für den Kunden auf dem Warenetikett nicht sichtbare Angaben (wie zum Beispiel ein Mindesthaltbarkeitsdatum oder eine Produktionschargennummer) ausgelesen und über das Funknetzwerk an den Zentralrechner geschickt werden können. Bei Rückrufaktionen eines Herstellers kann so schnell festgestellt werden, ob im Regal Ware der betreffenden Produktionscharge ist, die aus dem Regal entfernt werden muss.

Das Gerät kann auch dazu geeignet sein, sowohl abgelesene (zum Beispiel Barcode) als auch händisch eingegebene Daten an den Zentralcomputer zu senden. Dazu weist das Gerät zusätzlich zu dem Scanner eine Eingabeeinrichtung, zum Beispiel eine Tastatur wie beim Telefon auf, mit dem Zahlen oder andere Informationen eingegeben und zusammen mit dem eingescannten Barcode im Computer bei der entsprechenden Ware abgelegt werden können. Dabei ist das Gerät bevorzugt nicht größer als ein modernes Mobiltelefon, so dass es vom Personal einfach in der Tasche mitgeführt werden kann. Spontane Einfälle bei einem Rundgang können so zentral abrufbar notiert werden, die Inventur kann schnell und effizient durchgeführt werden, es kann leicht kontrolliert werden, ob eine ausgehende Ware noch im Lager liegt oder bereits bestellt ist, etc. Das Gerät kann auch die Mobiltelefonoption bieten, so dass der Nutzer jederzeit telefonische Nachfragen stellen kann.

Vorteilhaft ist es, wenn mittels des Gerätes über das Funknetz auch direkt auf die Warenetiketten eingewirkt werden kann. Direkt heißt hier ohne den Umweg über den Zentralrechner. Das Gerät kann sich in diesem Fall direkt mit der Elektronik bzw. dem entsprechenden Elektronikmodul bevorzugt automatisch verbinden und der Bediener kann dann zum Beispiel Angaben auf dem Etikett direkt ändern, wobei er die Änderung direkt sieht und eventuell nachbessern kann. So kann der Bediener vor Ort, wenn er sieht, dass ein Sonderposten fast abverkauft ist, den Preis ändern, um auch den Rest des Sonderpostens noch los zu werden. Er kann zum Beispiel bei einer laufenden Aktion die Laufzeit verlängern oder auf das Warenetikett Bemerkungen "nur noch heute" oder "zwei zum Preis von einem" schreiben, wenn ihm beim Rundgang im Laden eine solche Aktion einfällt. Die Änderungen werden dann von der Elektronik an den Zentralcomputer übermittelt, so dass eine lückenlose Protokollierung sämtlicher Vorgänge erfolgt und mögliche Preisänderungen über den Zentralcomputer zeitnah oder zeitgleich in den Kassen umgesetzt werden.

Statt dass die Elektronik die Änderungen an den Zentralcomputer meldet, kann das Gerät auch gleichzeitig über das entsprechende Elektronikmodul mit dem Warenetikett und mit dem Zentralcomputer je über eine Funkverbindung verbunden sein. Die Änderungen die an dem Elektronikmodul eingegeben werden, werden so zeitgleich an den Zentralcomputer übermittelt. Ein Abgleich zwischen der Elektronik und dem Zentralcomputer kann dann zu einem späteren Zeitpunkt automatisch erfolgen.

Die Wiedergabe der Informationen auf dem Warenetikett kann in schwarz-weiß bzw. weiß-schwarz erfolgen, bevorzugt kann die Wiedergabe aber in zwei oder mehr Farben erfolgen. Dabei können die Schrift und Grafiken bunt angezeigt werden und/oder der Hintergrund kann in unterschiedlichen Farben erscheinen. So kann zum Beispiel der Hintergrund bei Sonderaktionen rot sein.

Gerade wenn es darum geht, spezielle Aktionen für den Verbraucher hervorzuheben, kann das Warenetikett mittels der Elektronik zwischen einem hellen Wiedergabemodus und einem abgedunkelten Wiedergabemodus hin- und hergeschaltet werden, so dass ein Blinkeffekt erzeugt wird. Alternativ kann die Anzeige in Art eines Laufbandes über das Warenetikett laufen.

Ein Elektronikmodul kann weiterhin einen Soundgenerator aufweisen, mit dem am POS Geräusche erzeugt werden können, um die Aufmerksamkeit des Käufers zu erregen. Ebenso kann, gesteuert von dem Elektronikmodul, zum Beispiel ein typischer Duft abgegeben werden, zum Beispiel am Kaffeeregal, um den Kunden zum Kauf zu animieren.

Im Folgenden wird die Erfindung anhand eines Ausführungsbeispiels verdeutlicht. An dem Ausführungsbeispiel offenbar werdende Merkmale bilden jeweils einzeln oder in jeder Merkmalskombination die Gegenstände der Ansprüche und auch die vorstehend beschriebenen Ausgestaltungen vorteilhaft weiter. Es zeigen:
- Figur 1:: ein Warenetikett aus E-Paper
- Figur 2:: Blockdiagramm eines Warenetiketts
- Figur 3:: Aufbauprinzip eines erfindungsgemäßen Systems

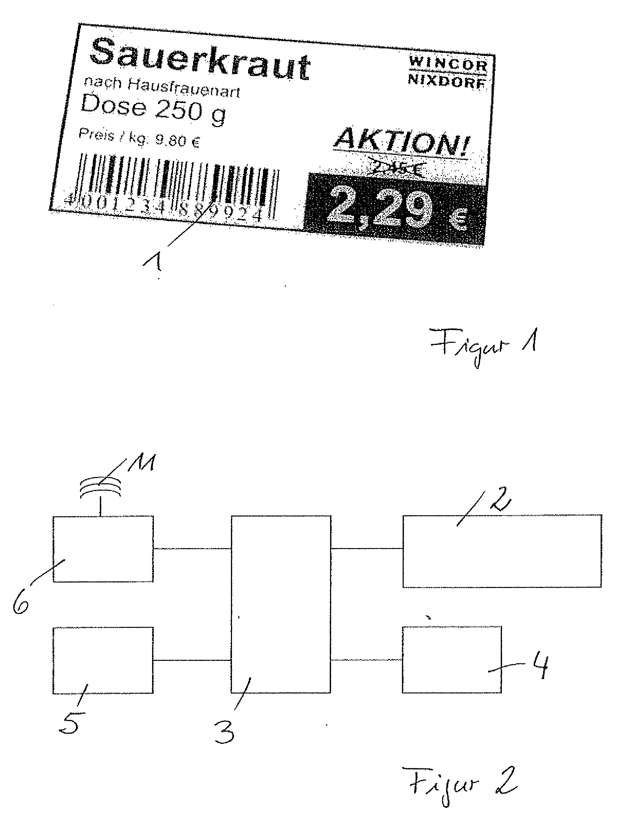

Figur 1 zeigt ein erfindungsgemäßes Warenetikett. Das Warenetikett 1 besteht aus E-Paper und wird durch ein nicht gezeigtes Elektronikmodul angesteuert. Alle auf dem Warenetikett 1 gezeigten angaben sind durch das Elektronikmodul generiert und können daher unabhängig voneinander geändert werden. Dies gilt für die Bezeichnung der Ware, die Mengenangabe, den Preis, den EAN-Code und die Zusatzangabe, dass es sich um eine Aktion handelt.

Die Anzeigen auf dem Warenetikett 1 werden dauerhaft dargestellt, ohne dass es dazu einer Energiezufuhr bedarf. Nur wenn Angaben auf dem Warenetikett 1 geändert werden, wird Energie benötigt und verbraucht. Diese Energie kann entweder von einer Energiequelle, zum Beispiel einer Batterie, geliefert werden, die fest mit dem Warenetikett 1 verbunden oder in dieses implementiert ist, oder die Energie kann dem Warenetikett 1 bei Bedarf zum Beispiel von dem Elektronikmodul zugeführt werden. Die Batterien, insbesondere die Batterien, die das Warenetikett 1 aufweist, haben bei normaler Benutzung des Warenetiketts 1 eine Lebensdauer von bis zu 10 und mehr Jahren. Leere Batterien des Warenetiketts 1 oder des Elektronikmoduls können gewechselt werden, bevorzugt sind aber zumindest die im Warenetikett 1 integrierten Batterien nicht auswechselbar, so dass in diesem Fall bei einer leeren Batterie das ganze Warenetikett 1 ausgewechselt werden muss.

Die Darstellungen auf dem Warenetikett 1 können in schwarz-weiß bzw. weiß-schwarz erfolgen, es können aber auch Farben dargestellt werden, wenn dies zum Beispiel zur Heraushebung einer besonderen Aktion sinnvoll ist oder wenn eine Marke im Farben dargestellt werden muss. Wenn von der normalen reinen weiß-schwarz bzw. schwarz-weiß Wiedergabe zu einer farbigen Wiedergabe gewechselt werden soll, wird bevorzugt das Warenetikett 1 am Ort ausgetauscht, da die Kosten für ein Warenetikett 1 mit der Möglichkeit von farblichen Darstellungen höher sind. Dazu kann zum Beispiel das Warenetikett 1 von der Elektronik abgenommen und durch ein anders Warenetikett 1 ersetzt werden. Stattdessen kann auch eine zum Beispiel nicht trennbare Einheit aus Warenetikett 1 und Elektronikmodul am POS ausgetauscht werden.

Die Figur 2 zeigt ein Blockdiagramm des Warenetiketts1. Das Warenetikett 1 weist ein Display 2 aus E-Paper auf und ist mit dem Elektronikmodul 3 verbunden. Das Elektronikmodul weist im gezeigten Beispiel eine Batterie 4 auf, die das Elektronikmodul 3 mit Energie versorgt und die auch die Energie liefern kann, die benötigt wird, um Anzeigen auf dem Display 2 zu ändern, einen Speicher 5, in dem zumindest die auf dem Display 2 dargestellte Anzeige sowie die Adresse des Warenetiketts 1 abgespeichert ist, sowie eine Antenne 6, mit der das Warenetikett 1 mit dem freien Funknetzwerk 11 verbunden oder verbindbar ist. Das heißt, das Elektronikmodul 3 der Figur 2 kann Daten über das freie Funknetzwerk 11 empfangen und versenden, das Display 2 mit Strom versorgen und relevante Daten speichern und verarbeiten. Im Elektronikmodul 3 kann zum Beispiel überprüft werden, ob die Solladresse der ankommenden Daten mit der Istadresse des Warenetiketts 1 übereinstimmt. Die empfangenen Daten können sodann umgewandelt und auf dem Display 2 zur Anzeige gebracht werden.

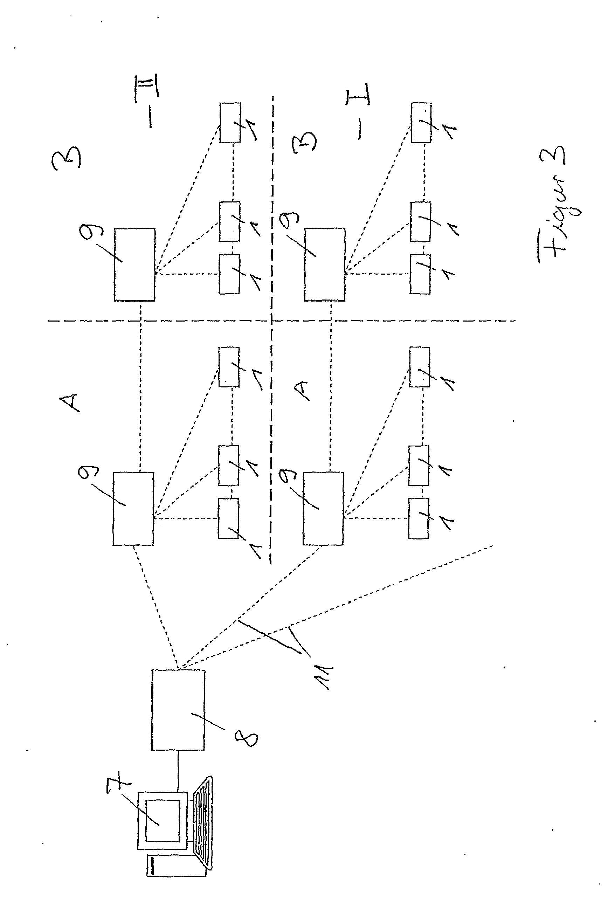

Figur 3 zeigt das Aufbauprinzip eines erfindungsgemäßen Systems zum Anzeigen aktueller Informationen auf einem Warenetikett aus E-Paper. Das System weist einen Zentralrechner 7 auf und einem mit dem Rechner 7 verbundenen oder verbindbaren Koordinator 8 für das offene Funknetzwerk 11. Rechner 7 und Koordinator 8 können auch in einem Gerät verwirklicht sein. Vom Koordinator 8 werden die im Rechner 7 erzeugten oder abgespeicherten Daten über das offene Funknetzwerk 11 an einen oder mehrere Router 9 gefunkt, von wo aus sie über das offenen Funknetzwerk 11, ein Unterfunknetzwerk oder eine andere bevorzugt drahtlose Verbindung an die einzelnen Warenetikette 1 bzw. deren nicht gezeigtes Elektronikmodul weitergeleitet werden. Dabei ist im gezeigten Ausführungsbeispiel ein Warenregal 12 angedeutet, das zwei Ebenen I, II und in jeder Ebene zwei Bereiche A, B aufweist. Jedem Bereich A, B jeder der Ebenen I, II ist je ein Router 9 zugeordnet, der alle in diesem Ebenenbereich vorhandenen Warenetikette 1 ansteuert.

Kennzeichenliste
- 1: Warenetikett
- 2: Display
- 3: Elektronikmodul
- 4: Batterie
- 5: Speicher
- 6: Antenne
- 7: Zentralrechner
- 8: Koordinator
- 9: Router
- 11: Funknetzwerk
- A: Bereich 1
- B: Bereich 2
- I: Ebene 1
- II: Ebene 2

## Patentansprüche

1. System zum Anzeigen aktueller Informationen an Warenträgern in Kauf- und Lagerhäusern, wobei das System umfasst:
a) einen Zentralrechner (7) der zum Eingeben, Speichern, Korrigieren und Versenden warenrelevanter Daten geeignet ist,
b) wenigstens ein elektronische Warenetikett (1), das die Informationen anzeigt, die der Zentralrechner (7) übermittelt,
c) ein offenes Funknetzwerk (11), über welches wenigstens Daten von dem Zentralcomputer (7) an das elektronische Warenetikett (1) gefunkt werden, und
d) eine Elektronik, das mit dem wenigstens einen Warenetikett (1) verbunden oder verbindbar ist und das die Funkdaten empfängt, verarbeitet, speichert und auf dem Warenetikett (1) sichtbar macht,
e) wobei das wenigstens eine elektronische Warenetikett (1) mit E-Paper realisiert ist.

2. System nach Anspruch 1, wobei das Warenetikett (1) eine aktive Matrix aufweist, die im Zusammenwirken mit der Elektronik eine hoch auflösende Wiedergabe der empfangenen Daten auf einem Display (2) des Warenetiketts ermöglicht.

3. System nach einem der vorgehenden Ansprüche, **dadurch gekennzeichnet, dass** die auf dem Warenetikett (1) für den Kunden sichtbar wiedergebbaren Daten wenigstens die Bezeichnung der Ware, Preisinformationen, Sonderinformationen, Grafiken, Logos und den EAN-Code umfassen.

4. System nach einem der vorgehenden Ansprüche, wobei das System weiterhin ein tragbares Lesegerät umfasst, mit dessen Hilfe Informationen von den Warenetiketten (1) abgelesen und über das Funknetzwerk (11) an den Zentralrechner (7) gefunkt werden.

5. System nach einem der Ansprüche 1 bis 3, wobei das System weiterhin einen tragbaren Rechner umfasst, mit dessen Hilfe Informationen von den Warenetiketten (1) abgelesen und über das offene Funkwerk (11) an den Zentralrechner (7) gefunkt werden und/oder mit dem Angaben auf den Warenetiketten (1) zum Beispiel am Warenregal in Echtzeit geändert werden können, wobei der tragbare Rechner über das offene Funknetz (11) mit dem Zentralrechner (7) und dem Warenetikett (1) verbunden ist und die Daten im Zentralrechner (7) zeitgleich zur Eingabe vor Ort verändert werden.

6. System nach einem der vorgehenden Ansprüche, wobei die Informationen auf dem Warenetikett (1) wenigstes zweifarbig wiedergebbar sind.

7. System nach einem der vorgehenden Ansprüche, wobei das Warenetikett (1) mittels der Elektronik zwischen einem hellen Wiedergabemodus und einem abgedunkelten Wiedergabemodus hin- und herschaltbar ist, so dass ein Blinkeffekt erzeugt wird.

8. System nach einem der vorgehenden Ansprüche, **dadurch gekennzeichnet, dass** es sich bei dem offenen Funknetzwerk (11) um eine Netzwerk nach dem ZigBee^{®}-Standard handelt.

9. System nach einem der vorgehenden Ansprüche, **dadurch gekennzeichnet, dass** die Elektronik aus mehreren Elektronikmodulen (3) besteht, wobei jedes der Elektronikmodule (3) direkt oder über Gateways mit dem Zentralrechner (7) verbunden oder verbindbar ist.

10. System nach dem vorgehenden Anspruch, **dadurch gekennzeichnet, dass** die Elektronikmodule (3) alle untereinander verbunden sind und die Aufgaben eines oder mehrerer defekter Elektronikmodule (3) durch die intakten Elektronikmodule (3) übernommen werden.

11. System nach einem der zwei vorgehenden Ansprüche, **dadurch gekennzeichnet, dass** jedem Warenetikett (1) je ein Elektronikmodul (3) zugeordnet ist.

12. System nach einem der Ansprüche 9 oder 10, **dadurch gekennzeichnet, dass** mehreren Warenetiketten (1) gemeinsam je ein Elektronikmodul (3) zugeordnet ist.

## Geänderte Patentansprüche

### Geänderte Patentansprüche gemäss Regel 137(2) EPÜ.

**1.** System zum Anzeigen aktueller Informationen an Warenträgem in Kauf- und Lagerhäusern, wobei das System umfasst:
a) einen Zentralrechner (7) der zum Eingeben, Speichern, Korrigieren und Versenden warenrelevanter Daten geeignet ist,
b) wenigstens ein elektronische Warenetikett (1), das die Informationen anzeigt, die der Zentralrechner (7) übermittelt,
c) ein offenes Funknetzwerk (11), über welches wenigstens Daten von dem Zentralcomputer (7) an das elektronische Warenetikett (1) gefunkt werden, und
d) eine Elektronik, das mit dem wenigstens einen Warenetikett (1) verbunden oder verbindbar ist und das die Funkdaten empfängt, verarbeitet, speichert und auf dem Warenetikett (1) sichtbar macht,
e) wobei das wenigstens eine elektronische Warenetikett (1) mit E-Paper realisiert ist, **dadurch gekennzeichnet, dass**
f) dass es sich bei dem offenen Funknetzwerk (11) um ein Netzwerk nach dem ZigBee-Standard handelt.

**2.** System nach Anspruch 1, wobei das Warenetikett (1) eine aktive Matrix aufweist, die im Zusammenwirken mit der Elektronik eine hoch auflösende Wiedergabe der empfangenen Daten auf einem Display (2) des Warenetiketts ermöglicht.

**3.** System nach einem der vorgehenden Ansprüche, **dadurch gekennzeichnet, dass** die auf dem Warenetikett (1) für den Kunden sichtbar wiedergebbaren Daten wenigstens die Bezeichnung der Ware, Preisinformationen, Sonderinformationen, Grafiken, Logos und den EAN-Code umfassen.

**4.** System nach einem der vorgehenden Ansprüche, wobei das System weiterhin ein tragbares Lesegerät umfasst, mit dessen Hilfe Informationen von den Warenetiketten (1) abgelesen und über das Funknetzwerk (11) an den Zentralrechner (7) gefunkt werden.

**5.** System nach einem der Ansprüche 1 bis 3, wobei das System weiterhin einen tragbaren Rechner umfasst, mit dessen Hilfe Informationen von den Warenetiketten (1) abgelesen und über das offene Funkwerk (11) an den Zentralrechner (7) gefunkt werden und/oder mit dem Angaben auf den Warenetiketten (1) zum Beispiel am Warenregal in Echtzeit geändert werden können, wobei der tragbare Rechner über das offene Funknetz (11) mit dem Zentralrechner (7) und dem Warenetikett (1) verbunden ist und die Daten im Zentralrechner (7) zeitgleich zur Eingabe vor Ort verändert werden.

**6.** System nach einem der vorgehenden Ansprüche, wobei die Informationen auf dem Warenetikett (1) wenigstes zweifarbig wiedergebbar sind.

**7.** System nach einem der vorgehenden Ansprüche, wobei das Warenetikett (1) mittels der Elektronik zwischen einem hellen Wiedergabemodus und einem abgedunkelten Wiedergabemodus hin- und herschaltbar ist, so dass ein Blinkeffekt erzeugt wird.

**8.** System nach einem der vorgehenden Ansprüche, **dadurch gekennzeichnet, dass** die Elektronik aus mehreren Elektronikmodulen (3) besteht, wobei jedes der Elektronikmodule (3) direkt oder über Gateways mit dem Zentralrechner (7) verbunden oder verbindbar ist.

**9.** System nach dem vorgehenden Anspruch, **dadurch gekennzeichnet, dass** die Elektronikmodule (3) alle untereinander verbunden sind und die Aufgaben eines oder mehrerer defekter Elektronikmodule (3) durch die intakten Elektronikmodule (3) übernommen werden.

**10.** System nach einem der zwei vorgehenden Ansprüche, **dadurch gekennzeichnet, dass** jedem Warenetikett (1) je ein Elektronikmodul (3) zugeordnet ist.

**11.** System nach einem der Ansprüche 9 oder 10, **dadurch gekennzeichnet, dass** mehreren Warenetiketten (1) gemeinsam je ein Elektronikmodul (3) zugeordnet ist.
